# EUROPEAN PATENT SPECIFICATION

(11) **EP 3 838 869 B1**
(45) Date of publication and mention of the grant of the patent: **30.07.2025**
(21) Application number: 20214732.8
(22) Date of filing: 16.12.2020
(51) Int. Cl.: C04B 35/80, B32B 18/00, C04B 35/571, C04B 35/628, F01D 5/18, C04B 35/10, C04B 35/14, C04B 35/18, C04B 35/44, C04B 35/565, C04B 35/58, C04B 35/584, C04B 35/597

(54) **REINFORCED CERAMIC MATRIX COMPOSITE AND METHOD OF MANUFACTURE**
VERSTÄRKTER KERAMISCHER MATRIXVERBUNDWERKSTOFF UND VERFAHREN ZU SEINER HERSTELLUNG
COMPOSITE À MATRICE CÉRAMIQUE RENFORCÉ ET SON PROCÉDÉ DE FABRICATION

(30) Priority: 20.12.2019 US 201916723360
(43) Date of publication of application: 23.06.2021
(73) Proprietor: RTX Corporation, Farmington, CT 06032 (US)
(72) Inventor: KRACUM, Michael R., Manchester, CT 06040 (US); JARMON, David C., Hendersonville, NC 28739 (US)
(74) Representative: Dehns

(56) References cited:
- EP-A2- 0 399 548
- US-A1- 2014 161 626

## Description

### BACKGROUND

Exemplary embodiments pertain to the art of ceramic matrix composites.

Ceramic matrix composites (CMC) can be formed by infiltrating a preform with a matrix material such as by chemical vapor infiltration to form the matrix. Ceramic matrix composites have high temperature capability and are light weight, and are an attractive material for various applications in which high temperature durability and light weight are desired. Based on these and other features, there remains a desire and need for alternate methods and materials for ceramic matrix composites.

EP 0 399 548 A2 discloses a composite threaded member having a helical composite portion externally bonded to a core portion.

### BRIEF DESCRIPTION

A method of making a ceramic matrix composite is disclosed. According to the method, a first preform comprising fibers is formed, and a second preform including a helical surface portion is inserted into the first preform. The first preform with the inserted second preform is infiltrated with a matrix material comprising a ceramic to form the ceramic matrix composite.

The first preform may comprise a three-dimensional woven fiber preform or a stacked fiber layup.

The first preform may comprise a stacked layup of fibers including a Z-axis perpendicular to layers in the stacked layup, and the second preform may be inserted with a helical axis of said helical surface portion arranged parallel to the Z-axis.

The method may further comprise rotating the second preform about an axis of the helix in a rotational direction that promotes advancement of the helical surface through the first preform.

Axial movement of the second preform with said insertion may be equal to axial distance traveled by said helical surface portion in response to said rotation.

The helical surface portion may include a portion arranged as a screw.

The helical surface portion may include a helical portion arranged as a spring.

The second preform may be inserted into the first preform with the helical portion arranged as a spring being under tension, or under compression, or under neutral compression/tension.

The method may further comprise compressing the first preform and inserted second preform.

Compression of the inserted second preform may include a helical compression of the portion of the second preform arranged as a spring.

The second preform may comprise ceramic fibers and an organic polymer resin, and the method may include pyrolyzing the organic polymer resin after compression and before infiltrating the matrix material.

The method may further comprise compressing the first preform before infiltrating the matrix material.

The second preform may comprise ceramic fibers and an organic polymer resin, and the method may include pyrolyzing the organic polymer resin before infiltrating the matrix material.

The method may further include applying an interface coating to the first preform, or to the second preform, or to the first preform and the second preform before infiltrating the matrix material.

Infiltrating can comprise chemical vapor infiltration, atomic layer deposition, polymer infiltration and pyrolysis, and/or melt infiltration.

A ceramic matrix composite is also disclosed. The ceramic matrix composite includes a first portion including a matrix comprising a ceramic, and a reinforcement including fibers derived from the first preform in the matrix. A second portion including a helical surface portion interface with the first portion is disposed within the first portion.

The second portion may comprise a matrix comprising a ceramic, and a reinforcement comprising fibers in said matrix, said fibers derived from a second preform.

The helical surface portion may include a portion arranged as a screw.

The helical surface portion may include a helical portion arranged as a spring.

Also disclosed is a gas turbine engine component including a ceramic matrix composite that includes a first portion including a matrix comprising a ceramic, and a reinforcement including fibers derived from the first preform in the matrix. A second portion including a helical surface portion interface with the first portion is disposed within the first portion.

### BRIEF DESCRIPTION OF THE DRAWINGS

The following descriptions should not be considered limiting in any way. With reference to the accompanying drawings, like elements are numbered alike:
FIG. 1 schematically shows a fiber preform;
FIG. 2 schematically shows a preform with a helical surface portion;
FIG. 3 schematically shows insertion of a helical preform into the preform of FIG. 1;
FIG. 4 schematically shows the preform of FIG. 1 with the helical preform fully inserted;
FIG. 5 schematically shows a preform with an inserted helical preform under compression;
FIG. 6 schematically shows a fiber preform after compression, ready for infiltration with a matrix material;
FIG. 7 schematically shows the fiber preform with infiltrated matrix material; and
FIG. 8 is a partial cross-sectional view of a gas turbine engine.

### DETAILED DESCRIPTION

A detailed description of one or more embodiments of the disclosed apparatus and method are presented herein by way of exemplification and not limitation with reference to the Figures.

A ceramic matrix composite ("CMC") can be made by infiltrating a preform using matrix material such as by chemical vapor infiltration. The fiber preform contributes beneficial mechanical properties to the composite by providing reinforcement for a matrix material. Mechanical properties of interest include but are not limited to interlaminar shear strength ("ILS") and interlaminar tensile strength ("ITS"). CMC's can be used for high-temperature applications (e.g., 1202.4 °C (2200 °F) and above), and may be designated as ultra-high temperature ceramic matrix composites ("UHT-CMC"). Exemplary CMC materials can include silicon-containing, or oxide containing matrix and reinforcing materials. Some examples of CMCs include, but are not limited to, materials having a matrix and reinforcing fibers comprising non-oxide silicon-based materials such as silicon carbide, silicon nitride, silicon oxycarbides, silicon oxynitrides, silicides, and mixtures thereof. Examples include, but are not limited to, CMCs with a silicon carbide matrix and silicon carbide fiber; silicon nitride matrix and silicon carbide fiber; and silicon carbide/silicon nitride matrix mixture and silicon carbide fiber. Furthermore, CMCs can have a matrix and reinforcing fibers including oxide ceramics. Specifically, the oxide-oxide CMCs may include a matrix and reinforcing fibers comprising oxide-based materials such as aluminum oxide (Al₂O₃), silicon dioxide (SiO₂), yttrium aluminum garnet (YAG), aluminosilicates, or mixtures comprising any of the foregoing. Aluminosilicates can include crystalline materials such as mullite (3Al₂O₃ 2SiO₂), as well as glassy aluminosilicates. Other ceramic composite materials in addition to or in combination with silicon or oxygen may be used, including carbon, carbides (e.g., zirconium carbide, hafnium carbide, boron carbide), nitrides, or other ceramic materials, alone or in combinations including any of the materials noted above.

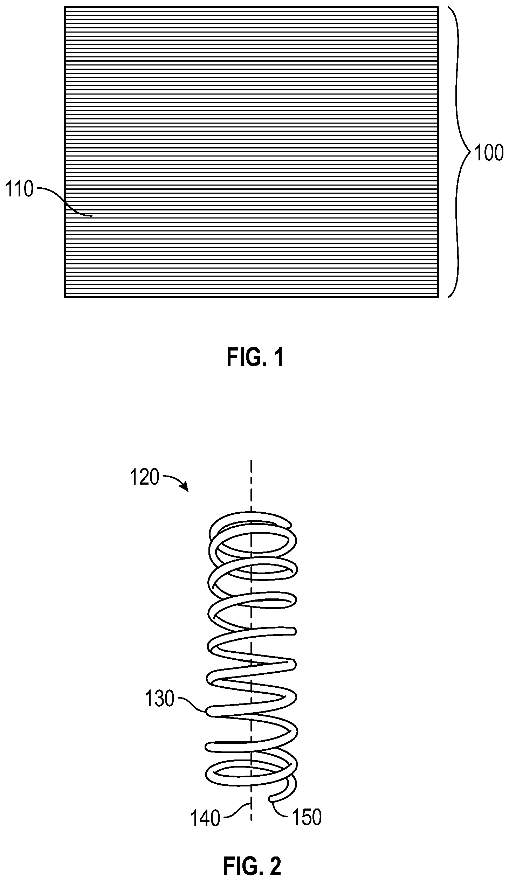

Referring to FIG. 1, a first preform 100 is shown according to various embodiments. As shown in FIG. 1, the preform 100 includes a plurality of fiber tows or plies 110). Each fiber tow or ply 110 can include a plurality of individual fibers (e.g., from 100 to 500 fibers per tow). In various aspects, the fiber tows or plies 110 can be arranged in a 1-D tape or a 2-D fabric, and layers of tape or woven or unwoven fabric can be stacked in layup (including stacked layups of 2-D fabrics such as a woven fabric and also stacked layups of 1-D tape or 2-D non-woven fabric) in order to form the preform 100. Alternatively, a 3-D fabric can be woven or otherwise arranged from continuous or noncontinuous fibers. The fibers can include any material typically used in CMC processing, such as carbon, alumina, silicon carbide, silicon nitride-carbide, zirconia, zirconium carbide, boron carbide, glass, or mullite. In some aspects, such as for high-temperature applications like gas turbine engine hot section components, fibers capable of withstanding specified temperatures can be used, including but not limited to ceramic fibers such as silicon carbide, alumina, zirconia, boron carbide, zirconium carbide, hafnium carbide. In some aspects, the fibers can include an interface coating (e.g., a boron nitride coating on a silicon carbide fiber). However, in other aspects the fibers can be bare fibers, in which case the fibers would not include an interface coating.

With reference now to FIG. 2, a second preform including a helical surface portion is shown in the form of a helical compression spring 120. Of course, the helical compression spring 120 is an example embodiment, and the second preform can include other types of helical surface portions. For example, the helical compression spring 120 includes a curvilinear-extending spring member 130 that extends along a helical path about an axis 140. The compression spring includes a hollow space at and about the axis 140, but the second preform could be solid at the axis 140 or include a solid annulus about the axis 140, with the helical surface portion arranged in the form of a shaft twisting spiral rectangular shaft, or arranged as helical threads extending from a solid linear shaft or annulus. In some aspects, the helical surface portion of the second preform can be arranged to function as a screw. As used herein, the term "screw" refers to the simple machine its operation that converts between linear motion and rotational motion, and between rotational force (i.e., torque) and linear force. The compression spring 120 is an example of a screw, and can be inserted into the preform 100 by rotating the compression spring 120 so that leading tip 150 follows a helical path into the preform.

The compression spring 120 can be formed from materials to provide a target resiliency for conversion of stress and strain. In some aspects, the compression spring 120 can be formed from fibers and an elastomeric or flexible matrix polymer. The matrix polymer can be any type of polymer, including but not limited to epoxy, polyurethane, a polystyrene, polypropylene, polyethylene, etc. The fibers can be any of the fibers disclosed above, and can be the same as or of different composition compared to the fibers used in the first preform. The fibers in the second preform can be chopped and dispersed in the matrix polymer, or they can be extruded as continuous fibers extending co-linearly along the helical extension of the spring member 130.

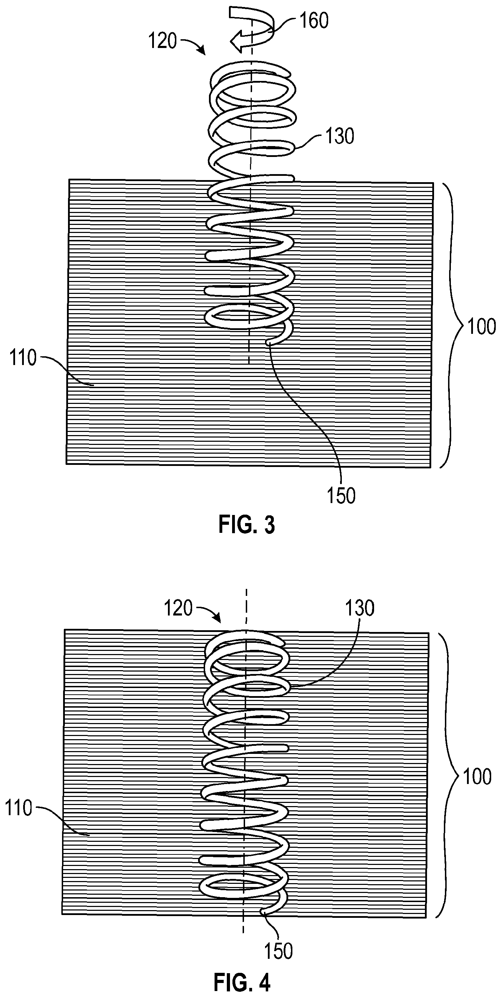

In some aspects, the compression spring 120 can be inserted in a Z-direction into the preform 100 as schematically shown in FIG. 3 (e.g., by screwing in with rotation in the direction of arrow 160). In some aspects, this rotational insertion can provide a technical effect of promoting reduced breakage of fibers during insertion compared to other reinforcement techniques such as z-pinning. In some aspects, the compression spring 120 can be inserted into the preform 100 so that compression spring is under tension. In some aspects, the compression spring 120 can be inserted into the preform 100 so that the compression spring is under compression. In some aspects, the compression spring 120 can be inserted into the preform 100 so that compression spring is under neither compression nor tension (i.e., neutral compression/ tension).

During some aspects of processing (e.g., compression of the preforms prior to and during matrix infiltration and consolidation), the compression spring 120 may undergo helical deformation in response to an application of linear stress. As used herein, the term "helical deformation" means changes in the parameters of the helix such as pitch (axial distance corresponding to one complete turn of the helix), arc length, curvature, torsion to accommodate stress applied along the axis 140 and resulting deformation of a spring or spring-like structure in response to axial stress. In some aspects, the second preform can utilize an elastomeric matrix polymer to provide a resilient compression spring 120. However, in some aspects, one-way deformation during processing, but absorption of compressive load by a resilient spring including shape recovery may not be needed if the performance of the preform is satisfied by placing reinforcing fibers along the helical insertion path of the second preform. In such cases, the polymer matrix for the second preform need not be elastomeric, but can instead provide a level of flexibility (in combination with the mechanical properties of the fibers in the second preform), that is sufficiently low to maintain its shape during insertion and to prevent deflection of the leading tip 150, and also sufficiently high to tolerate deformation such as in response to compression along the axis 140. FIG. 4 shows the compression spring 120 fully inserted in the Z-direction into the preform 100.

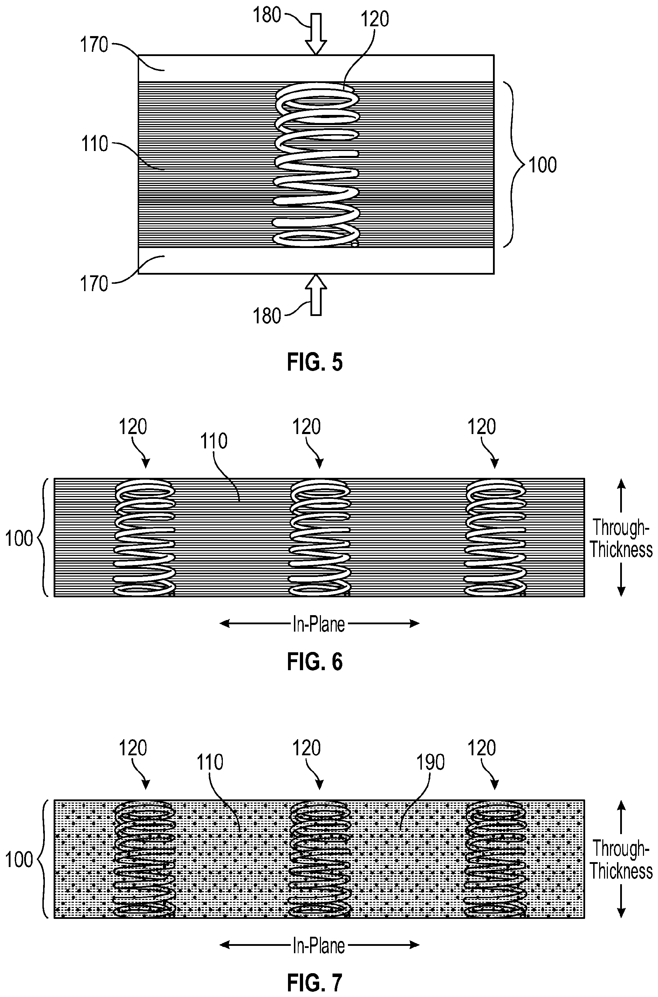

In FIG. 5, the preform 100 with the inserted second preform in the form of the compression spring 120 is shown disposed between tooling 170 and subjected to a compression load in the direction of arrows 180. Compression of a preform before matrix infiltration/consolidation can beneficially promote high fiber volume in final composite, but can cause problems for conventional z-pinning schemes, including but not limited to breaking of fibers, and crimping or other damage to fibers, which can adversely impact the mechanical and performance properties of the composite. However, the compression spring 120 accommodates the stress from the compressive load 180 with helical deformation including a change in helical pitch with shorter axial distances between each turn of the helix as shown in FIG. 5, which can promote reduced susceptibility to breaking of fibers, crimping, or other damage to fibers. A final preform structure after compression, with three compression springs 120 inserted into the preform 100, is shown in FIG. 6.

Any polymer resin in the second preform (and also any polymer resin in the first preform) can be pyrolyzed thermally decomposed, also known as burn-out, before infiltration of the matrix material. In cases where a fiber matrix interface coating is applied to the preforms, any polymer resin can be thermally decomposed before application of the fiber matrix interface coating. Thermal decomposition of polymer resin can be performed at temperatures of 200-700°C in an oxidizing, inert, or vacuum environment.

In some aspects, a fiber/matrix interface coating can optionally be applied before matrix consolidation. In some aspects, a fiber/matrix interface coating can promote reduction in formation or propagation of cracks by allowing the fiber to slide in the interface coating at the fiber-coating interface or by allowing the coated fiber to move in the matrix by sliding at the coating-matrix interface. The choice of material for a fiber/matrix interface coating depends on the materials of the fibers and the matrix. For example, in the case of silicon carbide fibers and a silicon carbide matrix, the fibers may be coated with boron nitride as a fiber/matrix interface coating. A matrix/fiber interface coating can be applied by known means such as chemical vapor infiltration or atomic layer deposition, which can promote a uniform thickness coating and can infiltrate fine spaces in the preform(s).

With any polymers thermally decomposed, and a fiber/matrix interface coating applied (if desired), the preforms are ready for matrix consolidation. Matrix consolidation is typically performed by infiltration of the preforms with a matrix material. For example, in some aspects, the preforms can be treated with chemical vapor infiltration (CVI) in which a gas comprising a matrix material precursor (e.g., CH₃SiCl₃-H₂) in a carrier gas at elevated temperature is infiltrated into the void space in the preforms and consolidates there to form a ceramic matrix material (e.g., SiC). The resultant composite, including fiber tows or plies 110 derived from the preform 100, fiber reinforcements derived from second preforms in the form of compression springs 120, and matrix material 190 is shown in FIG. 7.

The method described herein can be used to prepare a variety of components comprising ceramic matrix composites such as components in the aviation industry, marine industry and energy industry. Exemplary components include components for gas turbine engines, such as in high pressure compressors ("HPC"), fans, boosters, high pressure turbines ("HPT"), and low pressure turbines ("LPT"). More specifically exemplary components include combustion liners, shrouds, nozzles, and blades. In addition to the above-referenced technical effect of reduced fiber breakage, the reinforcement provided to the composite by the second preform can promote additional technical effects, including but not limited to promotion of improved interlaminar shear strength ("ILS") and/or improvement of interlaminar tensile strength ("ILT").

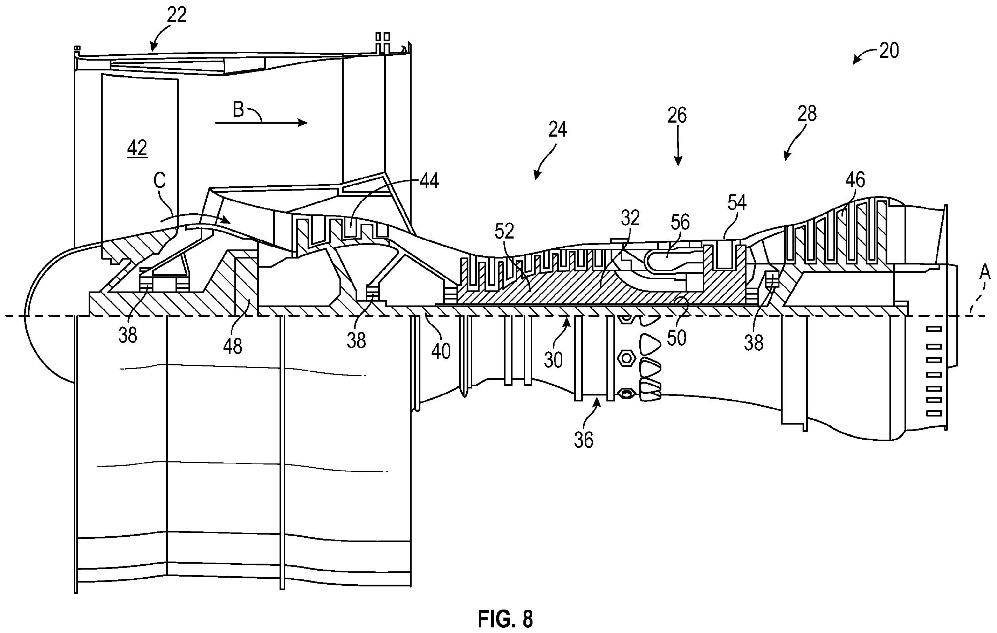

FIG. 8 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3 :1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight conditiontypically cruise at about 0.8 Mach (274 m/s) and about 35,000 feet (10,668 meters). The flight condition of 0.8 Mach (274 m/s) and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

The terminology used herein is for the purpose of describing particular embodiments only and is not intended to be limiting of the present disclosure. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of making a ceramic matrix composite, comprising:
forming a first preform (100) comprising fibers;
inserting a second preform (120) including a helical surface portion into the first preform (100); and
infiltrating a matrix material (190) comprising a ceramic into the first preform (100) to form the ceramic matrix composite.

2. The method of claim 1, wherein the first preform (100) comprises a three-dimensional woven fiber preform or a stacked fiber layup, optionally
wherein when the first preform (100) comprises a stacked layup of fibers, the first preform (100) includes a Z-axis perpendicular to layers in the stacked layup, and the second preform (120) is inserted with a helical axis (140) of said helical surface portion arranged parallel to the Z-axis.

3. The method of claim 1 or 2, further comprising rotating the second preform (120) about an axis (140) of the helix in a rotational direction that promotes advancement of the helical surface through the first preform (100), optionally
wherein axial movement of the second preform (120) with said insertion is equal to axial distance traveled by said helical surface portion in response to said rotation.

4. The method of claim 1, 2 or 3, wherein the helical surface portion includes a portion arranged as a screw or a spring (130).

5. The method of claim 4, wherein the second preform (120) is inserted into the first preform (100) with the helical portion arranged as a spring (130) being under tension, or under compression, or under neutral compression/tension.

6. The method of claim 4 or 5, further comprising compressing the first preform (100) and inserted second preform (120), optionally wherein compression of the inserted second preform (120) includes a helical compression of the portion of the second preform (120) arranged as a spring (130).

7. The method of claim 6, wherein the second preform (120) comprises ceramic fibers and an organic polymer resin, and the method includes pyrolyzing the organic polymer resin after compression and before infiltrating the matrix material (190).

8. The method of any preceding claim, further comprising compressing the first preform (100) before infiltrating the matrix material (190).

9. The method of any of claims 1 to 6, wherein the second preform (120) comprises ceramic fibers and an organic polymer resin, and the method includes pyrolyzing the organic polymer resin before infiltrating the matrix material (190).

10. The method of any preceding claim, further including applying an interface coating to the first preform (100), or to the second preform (120), or to the first preform (100) and the second preform (120) before infiltrating the matrix material (190).

11. The method of any preceding claim, wherein infiltrating comprises chemical vapor infiltration, atomic layer deposition, polymer infiltration and pyrolysis, and/or melt infiltration.

12. A ceramic matrix composite, comprising:
a first portion including a matrix (190) comprising a ceramic, and a reinforcement comprising fibers in said matrix, said fibers derived from a first preform (100); and
a second portion including a helical surface portion interface with the first portion, **characterized in that**
the second portion is within the first portion.

13. The ceramic matrix composite of claim 12, wherein the second portion comprises a matrix (190) comprising a ceramic, and a reinforcement comprising fibers in said matrix, said fibers derived from a second preform (120).

14. The ceramic matrix composite of claim 12 or 13, wherein the helical surface portion includes a portion arranged as a screw or a spring (130).

15. A gas turbine engine component, comprising the ceramic matric composite of any of claims 12 to 14.

## Patentansprüche

1. Verfahren zum Fertigen eines keramischen Matrixverbundwerkstoffs, umfassend:
Bilden eines ersten Vorformlings (100), der Fasern umfasst;
Einsetzen eines zweiten Vorformlings (120), der einen Abschnitt mit Spiralfläche beinhaltet, in den ersten Vorformling (100); und
Infiltrieren eines Keramik umfassenden Matrixmaterials (190) in den ersten Vorformling (100) zum Bilden des keramischen Matrixverbundwerkstoffs.

2. Verfahren nach Anspruch 1, wobei der erste Vorformling (100) einen dreidimensionalen gewebten Faservorformling oder ein gestapeltes Fasergelege umfasst, gegebenenfalls
wobei der erste Vorformling (100) eine Z-Achse senkrecht zu Schichten in dem gestapelten Gelege beinhaltet und der zweite Vorformling (120) eingesetzt wird, wobei eine Spiralachse (140) des Abschnitts mit Spiralfläche parallel zu der Z-Achse angeordnet ist, wenn der erste Vorformling (100) ein gestapeltes Gelege von Fasern umfasst.

3. Verfahren nach Anspruch 1 oder 2, ferner umfassend Drehen des zweiten Vorformlings (120) um eine Achse (140) der Spirale in einer Drehrichtung, die das Vordringen der Spiralfläche durch den ersten Vorformling (100) fördert, gegebenenfalls
wobei die axiale Bewegung des zweiten Vorformlings (120) beim Einsetzen gleich der axialen Entfernung ist, die der Abschnitt mit Spiralfläche als Reaktion auf die Drehung zurücklegt.

4. Verfahren nach Anspruch 1, 2 oder 3, wobei der Abschnitt mit Spiralfläche einen Abschnitt beinhaltet, der als Schraube oder Feder (130) angeordnet ist.

5. Verfahren nach Anspruch 4, wobei der zweite Vorformling (120) in den erste Vorformling (100) eingesetzt wird, wobei der Spiralabschnitt als eine Feder (130) unter Spannung oder unter Kompression oder unter neutraler Kompression/Spannung angeordnet ist.

6. Verfahren nach Anspruch 4 oder 5, ferner umfassend Komprimieren des ersten Vorformlings (100) und eingesetzten zweiten Vorformlings (120), wobei die Kompression des eingesetzten zweiten Vorformlings (120) gegebenenfalls eine Spiralkompression des als eine Feder (130) angeordneten Abschnitts des zweiten Vorformlings (120) beinhaltet.

7. Verfahren nach Anspruch 6, wobei der zweite Vorformling (120) keramische Fasern und ein organisches Polymerharz umfasst und das Verfahren Pyrolysieren des organischen Polymerharzes nach der Kompression und vor dem Infiltrieren des Matrixmaterials (190) beinhaltet.

8. Verfahren nach einem der vorhergehenden Ansprüche, ferner umfassend Komprimieren des ersten Vorformlings (100) vor dem Infiltrieren des Matrixmaterials (190).

9. Verfahren nach einem der Ansprüche 1 bis 6, wobei der zweite Vorformling (120) keramische Fasern und ein organisches Polymerharz umfasst und das Verfahren Pyrolysieren des organischen Polymerharzes vor dem Infiltrieren des Matrixmaterials (190) beinhaltet.

10. Verfahren nach einem der vorhergehenden Ansprüche, ferner beinhaltend Aufbringen einer Grenzflächenbeschichtung auf den ersten Vorformling (100) oder auf den zweiten Vorformling (120) oder auf den ersten Vorformling (100) und den zweite Vorformling (120) vor dem Infiltrieren des Matrixmaterials (190).

11. Verfahren nach einem der vorhergehenden Ansprüche, wobei das Infiltrieren chemische Gasphaseninfiltration, Atomlagenabscheidung, Polymerinfiltration, Pyrolyse und/oder Schmelzinfiltration umfasst.

12. Keramischer Matrixverbundwerkstoff, umfassend:
einen ersten Abschnitt, der eine Keramik umfassende Matrix (190) und eine Fasern umfassende Verstärkung in der Matrix umfasst,
wobei die Fasern aus einem ersten Vorformling (100) abgeleitet sind; und
einen zweiten Abschnitt, der eine Grenzfläche des Abschnitts mit Spiralfläche mit dem ersten Abschnitt beinhaltet, **dadurch gekennzeichnet, dass**
der zweite Abschnitt innerhalb des ersten Abschnitts liegt.

13. Keramischer Matrixverbundwerkstoff nach Anspruch 12, wobei der zweite Abschnitt eine Keramik umfassende Matrix (190) und eine Fasern umfassende Verstärkung in der Matrix umfasst, wobei die Fasern aus einem zweiten Vorformling (120) abgeleitet sind.

14. Keramischer Matrixverbundwerkstoff nach Anspruch 12 oder 13, wobei der Abschnitt mit Spiralfläche einen Abschnitt beinhaltet, der als Schraube oder Feder (130) angeordnet ist.

15. Komponente eines Gasturbinentriebwerks, umfassend den keramischen Matrixverbundwerkstoff nach einem der Ansprüche 12 bis 14.

## Revendications

1. Procédé de formation d'un composant composite à matrice céramique, comprenant :
la formation d'une première préforme (100) comprenant des fibres ;
l'insertion d'une seconde préforme (120) comportant une partie de surface hélicoïdale dans la première préforme (100) ; et
l'infiltration d'un matériau de matrice (190) comprenant une céramique dans la première préforme (100) pour former le composite de matrice céramique.

2. Procédé selon la revendication 1, dans lequel la première préforme (100) comprend une préforme de fibres tissées tridimensionnelles ou une superposition de fibres empilées, éventuellement
dans lequel lorsque la première préforme (100) comprend une superposition de fibres empilées, la première préforme (100) comporte un axe Z perpendiculaire aux couches dans la superposition empilée, et la seconde préforme (120) est insérée avec un axe hélicoïdal (140) de ladite partie de surface hélicoïdale agencé parallèlement à l'axe Z.

3. Procédé selon la revendication 1 ou 2, comprenant également la rotation de la seconde préforme (120) autour d'un axe (140) de l'hélice dans un sens de rotation favorisant l'avancement de la surface hélicoïdale à travers la première préforme (100), éventuellement
dans lequel le mouvement axial de la seconde préforme (120) avec ladite insertion est égal à la distance axiale parcourue par ladite partie de surface hélicoïdale en réponse à ladite rotation.

4. Procédé selon la revendication 1, 2 ou 3, dans lequel la partie de surface hélicoïdale comporte une partie agencée comme une vis ou un ressort (130).

5. Procédé selon la revendication 4, dans lequel la seconde préforme (120) est insérée dans la première préforme (100) avec la partie hélicoïdale agencée comme un ressort (130) étant sous tension, ou sous compression, ou sous compression/tension neutre.

6. Procédé selon la revendication 4 ou 5, comprenant également la compression de la première préforme (100) et de la seconde préforme insérée (120), éventuellement dans lequel la compression de la seconde préforme insérée (120) comporte une compression hélicoïdale de la partie de la seconde préforme (120) agencée comme un ressort (130).

7. Procédé selon la revendication 6, dans lequel la seconde préforme (120) comprend des fibres céramiques et une résine polymère organique, et le procédé comporte la pyrolyse de la résine polymère organique après compression et avant l'infiltration du matériau de matrice (190).

8. Procédé selon une quelconque revendication précédente, comprenant également la compression de la première préforme (100) avant l'infiltration du matériau de matrice (190).

9. Procédé selon l'une quelconque des revendications 1 à 6, dans lequel la seconde préforme (120) comprend des fibres céramiques et une résine polymère organique, et le procédé comporte la pyrolyse de la résine polymère organique avant l'infiltration du matériau de matrice (190).

10. Procédé selon une quelconque revendication précédente, comportant également l'application d'un revêtement d'interface sur la première préforme (100), ou sur la seconde préforme (120), ou sur la première préforme (100) et la seconde préforme (120) avant l'infiltration du matériau de matrice (190).

11. Procédé selon une quelconque revendication précédente, dans lequel l'infiltration comprend l'infiltration de vapeur chimique, le dépôt de couche atomique, l'infiltration et la pyrolyse de polymère, et/ou l'infiltration de matière fondue.

12. Composite à matrice céramique comprenant :
une première partie comportant une matrice (190) comprenant une céramique, et un renfort comprenant des fibres dans ladite matrice, lesdites fibres étant dérivées d'une première préforme (100) ; et
une seconde partie comportant une partie de surface hélicoïdale en interface avec la première partie, **caractérisée en ce que** la seconde partie est à l'intérieur de la première partie.

13. Composite à matrice céramique selon la revendication 12, dans lequel la seconde partie comprend une matrice (190) comprenant une céramique, et un renfort comprenant des fibres dans ladite matrice, lesdites fibres étant dérivées d'une seconde préforme (120).

14. Composite à matrice céramique selon la revendication 12 ou 13, dans lequel la partie de surface hélicoïdale comporte une partie agencée comme une vis ou un ressort (130).

15. Composant de moteur à turbine à gaz, comprenant le composite à matrice céramique selon l'une quelconque des revendications 12 à 14.
